# EUROPÄISCHE PATENTANMELDUNG

(11) **EP 3 002 480 A1**
(43) Veröffentlichungstag der Anmeldung: **06.04.2016**
(21) Anmeldenummer: 15001748.1
(22) Anmeldetag: 15.06.2015
(51) Int. Cl.: F16F 15/18, F16D 3/74, F16D 3/76

(54) **VORRICHTUNG ZUR ÜBERTRAGUNG VON DREHMOMENTEN**

(30) Priorität: 17.09.2014 DE 102014013453
(71) Anmelder: Centa-Antriebe Kirschey GmbH, 42781 Haan (DE)
(72) Erfinder: Exner, Jochen, 53773 Hennef (DE); Hasan, Mahamudul, 44803 Bochum (DE); Fitsch, Martin, 42115 Wuppertal (DE); Hartman, Norbert, 51069 Köln (DE); Bach, Martin, 40822 Mettmann (DE)
(74) Vertreter: Roche, von Westernhagen & Ehresmann

(57) **Zusammenfassung**

Dargestellt und beschrieben ist unter anderem eine Vorrichtung (10) zur Übertragung von Drehmomenten von einem Antrieb (11) zu einem Abtrieb (12), umfassend einen ersten Anschluss (13), insbesondere einen Flansch, zur Verbindung mit dem Antrieb, und einen zweiten Anschluss (14), insbesondere einen Flansch, zur Verbindung mit dem Abtrieb, sowie wenigstens ein in dem Kraftleitungsweg zwischen den beiden Anschlüssen angeordnetes elastisches Element (17, 17a, 17b) zur Schwingungsdämpfung, dadurch gekennzeichnet, dass dem elastischen Element ein Aktorelement (18, 18a, 18b) zugeordnet ist, mit wenigstens einem Grundkörper (25) und einem relativ dazu drehbaren Schwungmassenkörper (26, 26a, 26b), wobei an dem einen der beiden Körper wenigstens ein Leiterabschnitt (32a, 32b) und an dem anderen der beiden Körper wenigstens ein Permanentmagnet (28a, 28b, 28c, 28d) angeordnet ist, und wobei der Leiterabschnitt derart in dem Magnetfeld positionierbar ist, dass bei Stromfluss durch den Leiterabschnitt der Grundkörper mit einem von dem Schwungmassenkörper generierten Drehimpuls im Sinne einer Kompensation von Drehschwingungen beaufschlagbar ist.

## Beschreibung

Die Erfindung betrifft eine Vorrichtung zur Übertragung von Drehmomenten nach dem Oberbegriff des Anspruches 1.

Derartige Vorrichtungen werden von der Anmelderin seit Jahrzehnten entwickelt und vertrieben.

Die Vorrichtungen der gattungsgemäßen Art dienen beispielsweise zur Übertragung von Drehmomenten von einem Motor zu einem Getriebe.

Um in einem solchen Antriebsstrang auftretende Drehschwingungen zu kompensieren, oder zumindest reduzieren zu können, weist die bekannte Kupplung ein elastisches Element zur Schwingungsdämpfung auf.

Es ist auch bekannt, Vorrichtungen mit mehreren elastischen Elementen auszubilden.

Die elastischen Elemente können hinsichtlich ihrer Konstruktion und hinsichtlich der Wahl der verwendeten Materialen auf besondere Anwendungszwecke abgestimmt werden. Insbesondere ist eine Abstimmung auf bestimmte Frequenzen oder Frequenzbereiche möglich, um optimiert zur Schwingungsdämpfung beizutragen.

Vorrichtungen der gattungsgemäßen Art werden auch als Wellenkupplungen, und im Hinblick auf den Einsatz elastischer Elemente, auch als elastische Wellenkupplungen bezeichnet.

Der Erfindung liegt die Aufgabe zugrunde, eine elastische Wellenkupplung der im Oberbegriff des Anspruches 1 beschriebenen Art derartig weiterzubilden, dass eine verbesserte Drehschwingungskompensation möglich wird.

Die Erfindung löst diese Aufgabe mit den Merkmalen des Anspruches 1, insbesondere mit denen des Kennzeichenteils, und ist demgemäß dadurch gekennzeichnet, dass dem elastischen Element ein Aktorelement zugeordnet ist, mit wenigstens einem Grundkörper und einem relativ dazu drehbaren Schwungmassenkörper, wobei an dem einen der beiden Körper wenigstens ein Leiterabschnitt und an dem anderen der beiden Körper wenigstens ein Permanentmagnet angeordnet ist, und wobei der Leiterabschnitt derart in dem Magnetfeld positionierbar ist, dass bei Stromfluss durch den Leiterabschnitt der Grundkörper mit einem von dem Schwungmassenkörper generierten Drehimpuls im Sinne einer Kompensation von Drehschwingungen beaufschlagbar ist.

Das Prinzip der Erfindung besteht im wesentlichen darin, dass die Vorrichtung zusätzlich zu dem elastischen Element noch ein Aktorelement aufweist.

Ein geeignetes Aktorelement ist zum Beispiel in der nachveröffentlichten deutschen Patentanmeldung DE 10 2014 013 322.2 beschrieben.

Die Erfindung kombiniert ein solches, dort beschriebenes Aktorelement mit einem elastischen Element. Infolge dieser Kombination kann eine verbesserte Kompensation von Drehschwingungen in dem Antriebsstrang erreicht werden.

Gemäß der Erfindung weist das Aktorelement wenigstens einen Grundkörper und einen relativ dazu drehbaren Schwungmassenkörper auf.

Der Grundkörper ist drehfest mit dem elastischen Element, insbesondere drehfest mit einer der beiden Anschlussseiten des elastischen Elementes, verbunden. Der Schwungmassenkörper ist relativ zu dem Grundkörper drehbar.

Vorteilhaft kann der Schwungmassenkörper unmittelbar an dem Grundkörper drehbar gelagert sein. Denkbar ist alternativ auch eine drehbare Lagerung des Schwungmassenkörpers an einer ortsfesten Lagerung.

Nachfolgend werden bevorzugte Ausführungsbeispiele beschrieben, bei denen der Schwungmassenkörper unmittelbar an dem Grundkörper drehbar gelagert ist.

Gemäß der Erfindung ist an einem der beiden Körper - Grundkörper und Schwungmassenkörper - wenigstens ein Leiterabschnitt angeordnet. An dem anderen der beiden Körper ist wenigstens ein Permanentmagnet angeordnet. Als Leiterabschnitt im Sinne der vorliegenden Erfindung wird jeder elektrisch leitende Leiter angesehen, der von einem Strom durchfließbar ist. Als Permanentmagnet im Sinne der vorliegenden Patentanmeldung wird jedes Element angesehen, welches ein magnetisches, insbesondere statisches, Feld erzeugen kann.

Gemäß der Erfindung ist der Leiterabschnitt derart in dem Magnetfeld positionierbar, dass bei Stromfluss durch den Leiterabschnitt der Schwungmassenkörper einen Drehimpuls generieren kann, und den Grundkörper mit diesem Drehimpuls beaufschlagen kann. Die Beaufschlagung des Grundkörpers mit einem Drehimpuls durch den Schwungmassenkörper erfolgt im Sinne einer Kompensation von Drehschwingungen auf dem Antriebsstrang.

Der Leiterabschnitt ist gemäß der Erfindung dauerhaft oder zumindest temporär in dem Magnetfeld positionierbar. Für den Fall, dass der Schwungmassenkörper drehbar an dem Grundkörper gelagert ist, und folglich mit diesem rotiert, kann der Schwungmassenkörper relativ zu dem Grundkörper unter Zuhilfenahme von Federelementen in eine relative Ruhelage hin vorgespannt sein. Weiter kann vorgesehen sein, dass der Schwungmassenkörper relativ zu dem Grundkörper ausgehend von der Ruhelage in beide Drehsinne entlang einem vorgegebenen maximalen Umfangswinkelbereich relativ gedreht werden kann.

Unter der Annahme, dass die Leiterschleife am Grundkörper und ein entsprechender Permanentmagnet, oder eine Mehrzahl von Permanentmagneten an dem Schwungmassenkörper angeordnet sind, stellt sich der erfindungsgemäße Effekt wie folgt ein:
Der Leiterabschnitt verläuft vorteilhaft im wesentlichen in Radialrichtung, und der Permanentmagnet ist bei in Ruhelage befindlichem Schwungmassenkörper derartig positioniert, dass das Magnetfeld den Leiterabschnitt im wesentlichen vollständig überstreicht. Bei Stromfluss durch den Leiter kann infolge der Lorentzkraft eine relative Kraftausübung derartig erfolgen, dass der Schwungmassenkörper relativ zu dem Grundkörper in Rotation versetzt wird. Der dabei entstehende Drehimpuls kann im Sinne eines Kompensationsdrehimpulses zur Kompensation von Drehschwingungen auf dem Antriebsstrang genutzt werden.

Zeit und Dauer bzw. Frequenz der Ansteuerung des Leiterabschnittes mit elektrischer Energie hängen von der Art der zu tilgenden Drehschwingung ab. Die Drehschwingung wird vorzugsweise unter Zuhilfenahme eines Sensors festgestellt und gemessen. Der Sensor ist mit einer Steuerung verbunden, die die vom Sensor generierten Signale entsprechend auswerten kann, und zur Kompensation von Drehschwingungen ein geeignetes optimiertes Steuersignal zur Erregung des Leiterabschnittes generieren kann.

Der Leiterabschnitt kann bei einer Ausführungsform der Erfindung Bestandteil einer Spule sein.

Vorteilhafterweise ist der Permanentmagnet gegenüber dem Leiterabschnitt derartig angeordnet, dass nur radial verlaufende, oder im wesentlich radial verlaufende Leiterabschnitte, von dem Magnetfeld überstrichen werden.

Die Überstreichung kann dabei permanent erfolgen. Letzteres gilt insbesondere, wenn der Schwungmassenkörper relativ zu dem Grundkörper an diesem drehbar gelagert ist, und mit diesem mit rotiert. Die Überstreichung kann auch nur temporär erfolgen, zum Beispiel wenn der Schwungmassenkörper ortsfest gelagert ist, und die gemeinsam mit dem elastischen Element und dem Grundkörper rotierenden Leiterabschnitte dabei nur zeitweise in das Magnetfeld eintauchen.

Die Besonderheit der Erfindung besteht darin, einen elektrodynamischen Aktor mit einem elastischen Element zu koppeln.

Das elastische Element kann hinsichtlich seiner Schwingungsdämpfungseigenschaften an die Einsatzmöglichkeiten des Aktorelementes zur Schwingungskompensation angepasst sein.

Insbesondere kann das elastische Element in einem bestimmten Frequenzbereich und/oder in einem bestimmten Amplitudenbereich bereits eine gewisse Schwingungskompensation erreichen. Das Aktorelement kann bei diesem Ausführungsbeispiel auf einen anderen oder auf den gleichen Frequenzbereich und/oder auf andere oder auf die gleichen Schwingungsamplituden im Sinne einer optimierten Drehschwingungskompensation hin ausgelegt werden. Durch Kombination des elastischen Elementes mit dem elektrodynamischen Aktorelement kann eine wesentliche Verbesserung der Wirkungsweise des Aktorelementes erreicht werden.

Beispielsweise kann unter Zuhilfenahme des elastischen Elementes in besonders vorteilhafter Weise eine Reduktiom von Amplitudenspitzen der Drehschwingungen erfolgen, so dass das Aktorelement anders, nämlich optimierter, ausgelegt werden kann, als wenn kein elastisches Element vorhanden wäre.

Alternativ besteht auch die Möglichkeit, das Aktorelement so auszubilden, dass Amplitudenspitzen der Drehschwingungen, oder bestimmte Frequenzbereiche der Drehschwingungen, nicht gedämpft werden sollen, so dass das elastische Element zur Schwingungsdämpfung zum Beispiel auf einen nur noch sehr schmalbandigen Frequenzbereich optimal ausgelegt werden kann.

Durch Kombination dieser beiden Schwingungsdämpfungsmechanismen kann eine insgesamt sehr vorteilhafte, zum Beispiel auch über einen breiten Frequenzbereich sehr effektive, Schwingungsdämpfung erzielt werden.

Gemäß einer vorteilhaften Ausgestaltung der Erfindung ist das Aktorelement zu dem elastischen Element in Reihe geschaltet. Die Reihenschaltung ermöglicht eine besonders einfache konstruktive Auslegung der Vorrichtung, sowie eine besonders gute Vorausberechnung der Schwingungseigenschaften des Gesamtsystems.

Gemäß einer vorteilhaften Ausgestaltung der Erfindung ist das Aktorelement - bezogen auf die Kraftleitungsrichtung - stromaufwärts des elastischen Elementes angeordnet. Durch diese Anordnung kann bewirkt werden, dass Drehschwingungen, die antriebsseitig in den Antriebsstrang eingeleitet werden, zunächst auf das Aktorelement treffen, bevor sie das elastische Element erreichen. Bestimmte Frequenzbereiche oder besonders hohe Amplituden können zum Beispiel bei einer entsprechenden Auslegung des Aktorelementes von dem elastischen Element ferngehalten werden.

Gemäß einer alternativen Ausgestaltung der Erfindung ist das Aktorelement - bezogen auf die Kraftleitungsrichtung - stromabwärts des elastischen Elementes angeordnet. Drehschwingungen in einem bestimmten Frequenz- und/oder Amplitudenbereich werden also - soweit vom Antrieb stammend - zunächst in das elastische Element eingeleitet und dort gedämpft, bevor sie auf das Aktorelement treffen. Hier kann das Aktorelement vor bestimmten Frequenzbereichen oder Amplituden geschützt werden.

Entsprechend kann eine optimierte technische Auslegung des Aktorelementes erfolgen.

Gemäß einer weiteren vorteilhaften Ausgestaltung der Erfindung sind wenigstens zwei elastische Elemente vorgesehen, wobei das Aktorelement zwischen den beiden elastischen Elementen angeordnet ist.

Gemäß einer weiteren Ausgestaltung der Erfindung sind wenigstens zwei Aktorelemente vorgesehen, wobei wenigstens ein elastisches Element zwischen den beiden Aktorelementen angeordnet ist.

Durch diese beiden zuvor beschriebenen Anordnungen kann eine weiter verbesserte Kompensation von Drehschwingungen zwischen Antrieb und Abtrieb erreicht werden.

Gemäß einer weiteren vorteilhaften Ausgestaltung der Erfindung ist das Aktorelement im wesentlichen ringförmig ausgebildet. Hierdurch kann eine besonders kompakte Bauform der Vorrichtung ermöglicht werden. Insbesondere kann das Aktorelement einen axialen Teilabschnitt des Antriebsstranges in Umfangsrichtung umgeben, wodurch die axiale Baulänge des Antriebsstranges klein gehalten werden kann.

Weiter vorteilhaft ist vorgesehen, dass das Aktorelement das elastische Element ringförmig umgibt. Hierdurch kann eine besonders kurz bauende Ausführung möglich werden.

Gemäß einer weiteren vorteilhaften Ausgestaltung der Erfindung ist dem Aktorelement und/oder dem elastischen Element wenigstens eine Einrichtung zum Ausgleich von Axialversatz und/oder Radialversatz und/oder Winkelversatz zwischen den beiden Anschlüssen zugeordnet. Beispielsweise kann das elastische Element eine Anschlussseite aufweisen, die mit einem Radialversatz ermöglichenden membranartigen Flansch ausgestaltet ist. Hierdurch kann ein Ausgleich von Versatz zugelassen werden.

Weitere Vorteile der Erfindung ergeben sich aus den nicht zitierten Unteransprüchen sowie anhand der nachfolgend, anhand der Zeichnungen beschriebenen, Ausführungsbeispiele. Diese zeigen:
- Fig. 1: in einer schematischen blockschaltbildartigen Darstellung ein erstes Ausführungsbeispiel einer erfindungsgemäßen Vorrichtung mit einem Aktorelement und einem elastischen Element,
- Fig. 2: ein weiteres Ausführungsbeispiel in einer Darstellung gemäß Fig. 1, wobei hier das Aktorelement stromaufwärts des elastischen Elementes angeordnet ist,
- Fig. 3: ein weiteres Ausführungsbeispiel der Erfindung in einer Darstellung gemäß Fig. 1 mit zwei elastischen Elementen,
- Fig. 4: ein weiteres Ausführungsbeispiel einer erfindungsgemäßen Vorrichtung in einer Darstellung gemäß Fig. 1, wobei das Aktorelement und das elastische Element im wesentlichen entlang einer gemeinsamem Radialebene angeordnet sind,
- Fix. 5: ein weiteres Ausführungsbeispiel der Erfindung in einer Darstellung gemäß Fig. 1, wobei zwei Aktorelemente vorgesehen sind,
- Fig. 6: in einer teilgeschnittenen schematischen Ansicht ein weiteres Ausführungsbeispiel der Erfindung mit einem Funktionsprinzip ähnlich dem Funktionsprinzip der Fig. 1,
- Fig.7: ein weiteres Ausführungsbeispiel einer erfindungsgemäßen Vorrichtung in einer Darstellung gemäß Fig. 6, wobei das Aktorelement ein elastisches Element, ähnlich der Darstellung der Fig. 4, ringförmig umgibt,
- Fig. 8: in einer teilgeschnittenen schematischen Ansicht einen Schnitt durch ein weiteres Ausführungsbeispiel eines Aktors mit Grundkörper und einem Schwungmassenkörper,
- Fig.9: in einer teilgeschnittenen schematischen Ansicht in Einzeldarstellung eine Spule, die einen Leiterabschnitt trägt,
- Fig. 10: in Einzeldarstellung eine Ansicht etwa entlang Ansichtspfeil X in Fig. 8 eine Anordnung mit zwei Permanentmagneten,
- Fig.11: in einer teilgeschnittenen schematischen Ansicht in Einzeldarstellung einen Spulenkörper und die Permanentmagnetanordnung etwa gemäß Ansichtspfeil XI in Fig. 8, und
- Fig. 12: in einer teilgeschnittenen schematischen Ansicht, etwa entlang Ansichtspfeil XII in Fig. 8, einen Bereich des Aktors mit Spule und Permanentmagnetanordnung.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

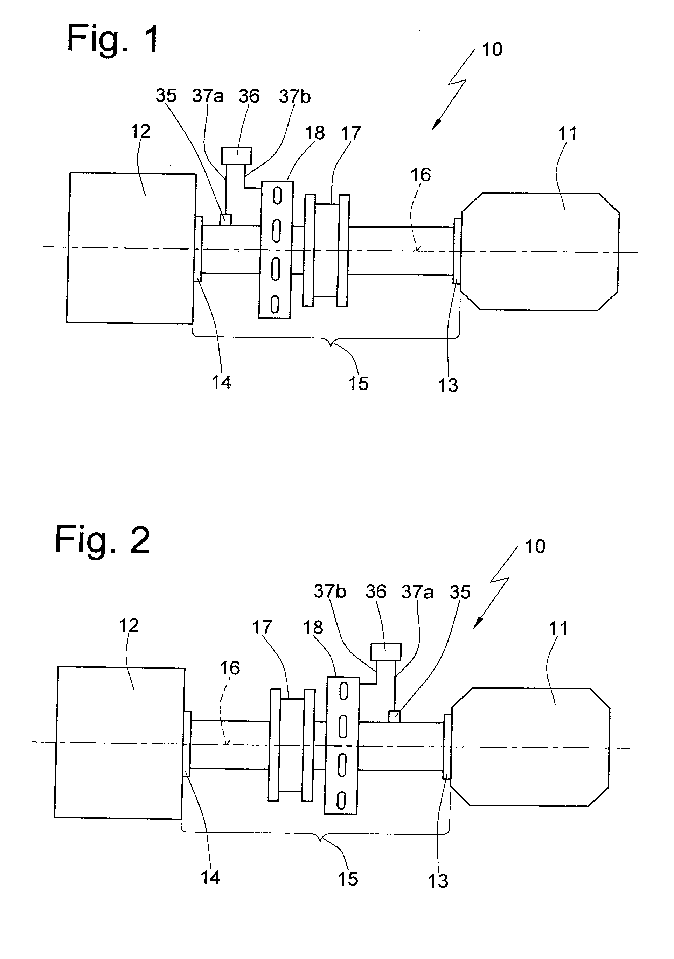

Die in ihrer Gesamtheit in den Figuren mit 10 bezeichnete Vorrichtung wird zunächst anhand des Ausführungsbeispiels der Fig. 1 erläutert:
Fig. 1 zeigt schematisch angedeutet einen Motor 11, an den über einen ersten Anschluss 13, beispielsweise einen Flansch 13, unmittelbar angeflanscht an das Schwungrad des Motors 11, ein insgesamt mit 15 bezeichneter Antriebsstrang festgelegt ist. Der Antriebsstrang 15 verbindet den Motor 11 mit der Eingangsseite eines Getriebes 12 unter Zuhilfenahme eines zweiten Anschlusses 14, beispielsweise wiederum eines Flansches 14.

Wesentlicher Bestandteil des Antriebsstranges 15 ist eine Vorrichtung 10 der erfindungsgemäßen Art. Eine solche Vorrichtung dient zur Übertragung von Drehmomenten von dem Motor 11 zu einem Getriebe 12. Die gattungsgemäße Vorrichtung wird auch als elastische Wellenkupplung bezeichnet.

Das Ausführungsbeispiel der Fig. 1 umfasst eine Wellenkupplung 10, die ein elastisches Element 17 und, bezogen auf den Kraftleitungsweg stromabwärts des elastischen Elementes 17 angeordnet, ein Aktorelement 18 aufweist.

Das Aktorelement 18 wird später noch im Detail erläutert. Es dient dazu, bei Auftreten von Drehschwingungen im Antriebsstrang 15 Kompensationsdrehmomente zu erzeugen, diese Kompensationsdrehmomente dem Antriebsstrang 15 aufzuzwingen, und hierdurch Drehschwingungen zu kompensieren, das heißt weitest möglich zu reduzieren.

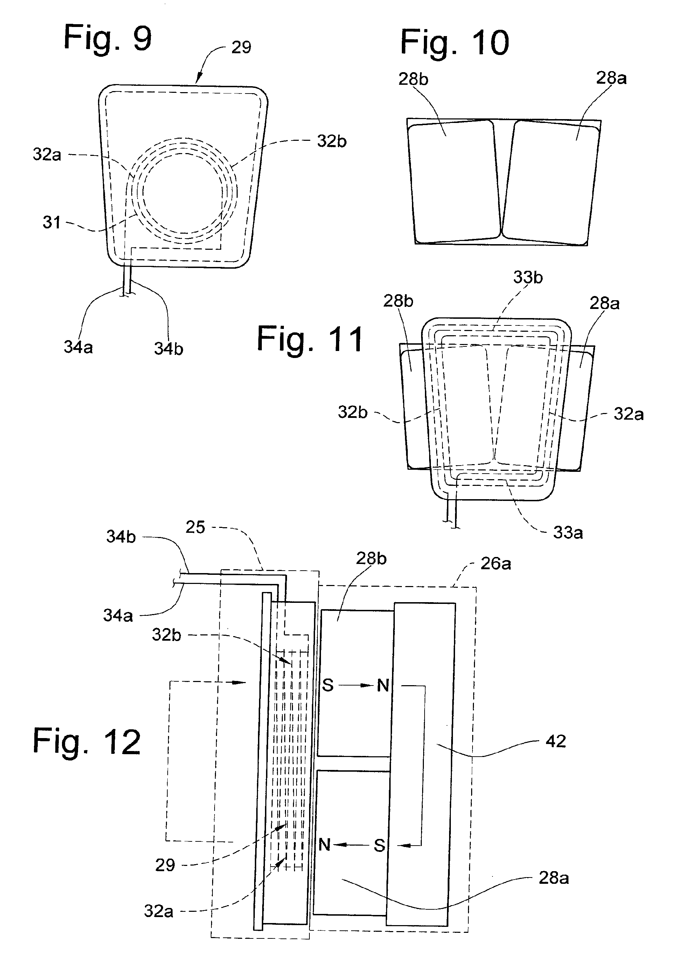

Schematisch dargestellt in Fig. 1 ist ein Sensor 35, der beispielsweise unmittelbar an dem Antriebsstrang 15 angeordnet sein kann. Über eine Wirkleitung 37a ist der Sensor 35 mit einer Steuerung 36 verbunden. Sobald am Sensor 35 Drehschwingungen im System 15 festgestellt werden, oder die Steuerung 36 aus den erhaltenen Messwerten derartige Drehschwingungen errechnet, kann die Steuerung 36 entsprechende Gegenmaßnahmen berechnen und einleiten. Hierzu wird von der Steuerung 36 aus über die Wirkleitung 37b ein entsprechendes Stromsignal oder ein Spannungssignal an den Aktor 18 gesandt. Dies bewirkt einen Stromfluss durch einen später noch zu beschreibenden Leiterabschnitt 32a, 32b (Fig. 11) in dem Aktor 18, wodurch auf Basis eines elektrodynamischen Wirkprinzips ein Teil des Aktorelementes 18, der sogenannte Schwungmassenkörper 26, relativ zu einem anderen Teil des Aktorelementes, dem sogenannten Grundkörper 25, in Rotation versetzt wird. Hierdurch wird ein Drehimpuls generiert. Dieser Drehimpuls führt zu einem Kompensationsdrehimpuls.

Auf dem Antriebsstrang 15 festgestellte Drehschwingungen werden so durch Gegenschwingungen überlagert, und damit insgesamt getilgt oder weitgehend getilgt.

Der Aufbau des Aktorelements 18 und der Aufbau des elastischen Elementes 17 werden später noch detaillierter beschrieben.

Zunächst soll erläutert werden, dass die seriell geschaltete Anordnung eines elastischen Elementes 17, also eines Elementes, welches aufgrund der Materialelastizität bereits Schwingungsspitzen aus dem Antriebsstrang herausnehmen kann, oder zumindest in bestimmten Frequenzbereichen eine gewisse Dämpfung bewirken kann, mit einem aktiv gesteuerten Aktorelement 18, in dieser Kombination zu einer besonders optimierten Schwingungstilgung führt.

Angemerkt sei des weiteren, dass der ganze Antriebsstrang 15 um die schematisch angedeutete Rotationsachse 1 ö dreht. Das Aktorelement 18 rotiert also mit dem Antriebsstrang 15.

Ausweislich des Ausführungsbeispiels der Fig. 2 ist erläutert, dass die serielle Schaltung von Aktorelement 18 und elastischem Element 17 auch in einer - bezüglich Fig. 1 - geometrisch umgekehrten Reihenfolge getroffen sein kann. Gemäß Fig. 2 ist das Aktorelement 18 stromaufwärtig - bezogen auf den Kraftleitungsfluss - relativ zu dem elastischen Element 17 angeordnet.

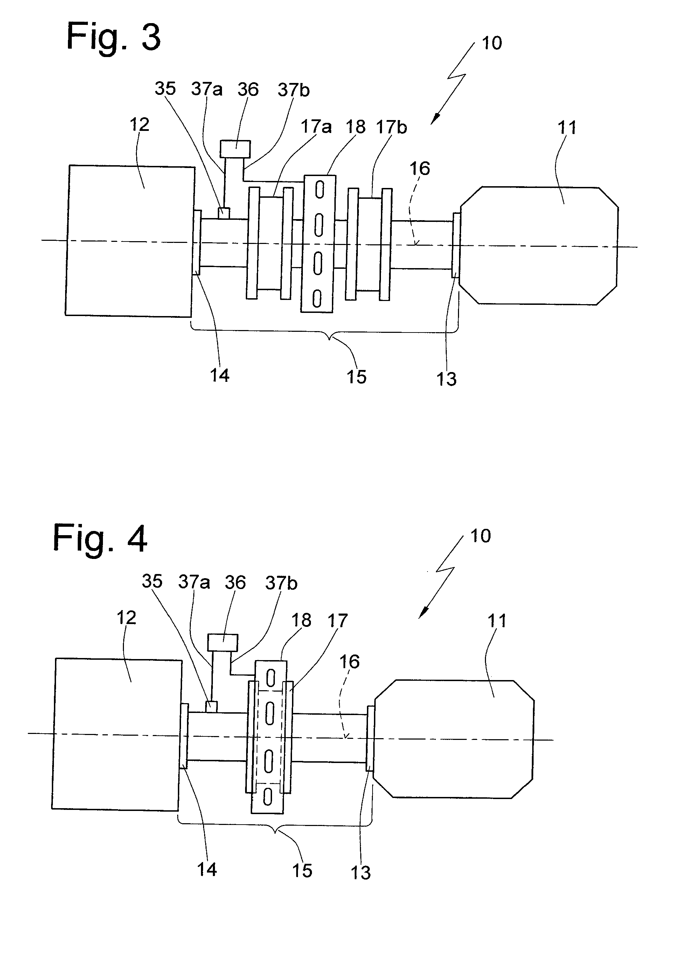

Bei einem weiteren Ausführungsbeispiel der Erfindung gemäß Fig. 3 sind zwei elastische Elemente 17a, 17b vorgesehen. Zwischen den beiden elastischen Elementen 17a, 17b ist das Aktorelement 18 angeordnet.

Ausweislich des Ausführungsbeispiels der Fig. 4 kann zur Erzielung einer sehr kompakten, das axial kurzbauenden Konstruktion, das Aktorelement 18 auch im wesentlichen ringkörperförmig ausgebildet sein, und das elastische Element 17 ringförmig umgeben. Hier kann vorgesehen sein, dass das Aktorelement 18 und das elastische Element 17 entlang einer gemeinsamen Radialebene angeordnet sind.

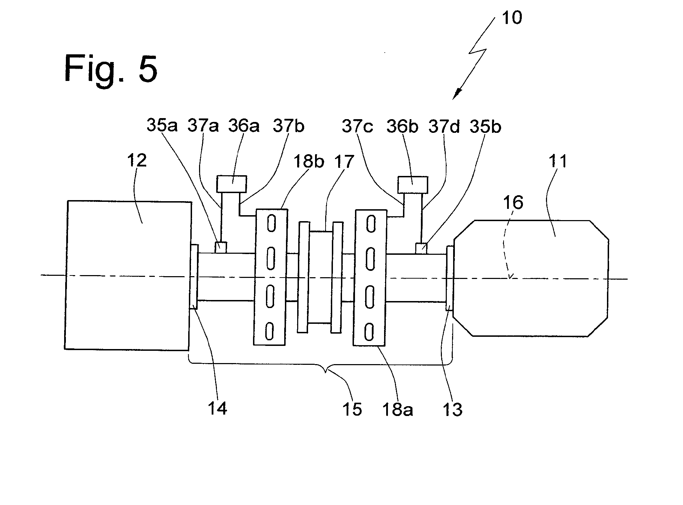

Bei dem Ausführungsbeispiel der Fig. 5 ist vorgesehen, dass zwischen einem ersten Aktorelement 18a und einem zweiten Aktorelement 18b ein elastisches Element 17 angeordnet ist.

Von der Erfindung umfasst sind auch elastische Wellenkupplungen 10, bei denen mehr als zwei Aktorelemente 18a, 18b und/oder mehr als zwei elastische Elemente 17a, 17b vorgesehen sind.

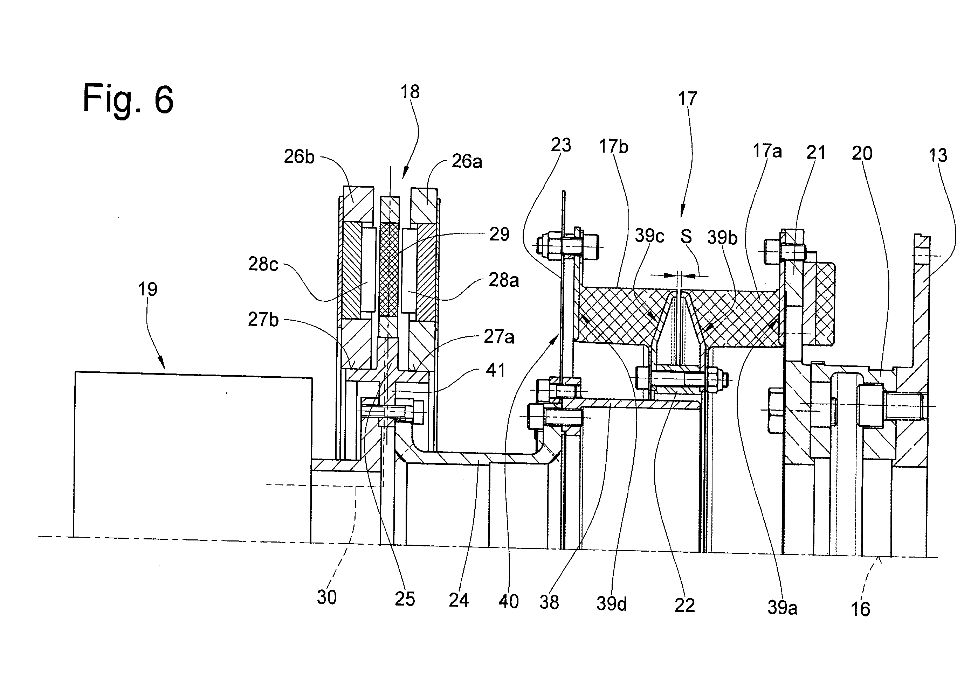

Ausweislich des Ausführungsbeispiels der Fig. 6, welches bezüglich der seriellen Anordnung von Aktorelement 18 und elastischem Element 17 dem Ausführungsbeispiel der Fig. 1 entspricht, sollen nun eine Reihe konstruktiver Details und Besonderheiten der erfindungsgemäßen Wellenkupplung 10 beschrieben werden:
Ausweislich Fig. 6 weist die erfindungsgemäße Vorrichtung 10 einen flanschartigen ersten Anschluss 13 auf, mit dem die Vorrichtung unmittelbar an den in Fig. 6 nicht dargestellten Motor 11 angeschraubt werden kann. Der erste Anschluss 13 ist über ein Zwischenstück 20 mit einem Anschlussflansch 21 des elastischen Elementes 17 verbunden. Das elastische Element 17 ist im wesentlichen symmetrisch ausgebildet, und umfasst eine linke Hälfte 17b und eine rechte Hälfte 17a. Zwischen den beiden elastischen Elementen 17a, 17b ist ein Spalt S angeordnet.

Die beiden Hälften 17a, 17b des elastischen Elementes 17 sind über ein metallisches Zwischenstück 22, einem sogenannten Zwischenflansch, miteinander fest verbunden.

Über einen sehr flexiblen Membranringflansch 23 ist das elastische Element 17 mit einer Lagerhülse 38 bzw. einem Zwischenstück 24 des Antriebsstranges 15 verbunden.

Die geometrische Ausbildung des elastischen Elementes 17 bei dem Ausführungsbeispiel der Fig. 6 ist lediglich beispielhaft getroffen. Bei anderen dargestellten Ausführungsbeispielen weist das elastische Element 17 nur ein aus gummielastischem Material bestehendes Element auf, und nicht, wie in dem Ausführungsbeispiel der Fig. 6, zwei im wesentlichen ringförmige, aus gummielastischem Material bestehende Elemente.

Angemerkt sei, dass die gummielastischen Elemente bei dem Ausführungsbeispiel der Fig. 6 mit ihren jeweiligen Grenzbereichen 39a, 39b, 39c 39d an die jeweiligen Befestigungselemente (zum Beispiel 21, 22) anvulkanisiert sein können.

Ausweislich Fig. 6 ist eine Einrichtung 40 zur Erzielung eines Winkelversatz-Ausgleiches vorgesehen. Bei dem Ausführungsbeispiel der Fig. 6 ist hierzu ein im wesentlichen kreisringförmiger Membranflansch 23 vorgesehen, der aus einem stabilen, aber elastischen Material, beispielsweise also Metall oder Kunststoff, gebildet sein kann. Durch diesen Membranflansch 23 kann ein Winkelversatz zwischen dem ersten Anschluss 13 und dem zweiten Anschluss 14 um einige Grad relativ zu der Rotationsachse 16 erreicht werden. Insbesondere beim Einbau einer erfindungsgemäßen Vorrichtung 10 in einen Bauraum, zum Beispiel im Falle einer Marine-Anwendung in den Motorraum eines Schiffes, können bauraumbedingt Montage- und Fertigungstoleranzen auftreten. Diese können durch die Ausgleichseinrichtung 40 aufgefangen werden.

Auch die elastischen Elemente 17, 17a, 17b können in einem gewissen Maße für einen Radialausgleich oder Axialausgleich oder einen Winkelversatzausgleich sorgen. Auch andere, bei dem Ausführungsbeispiel der Fig. 6 nicht dargestellte Einrichtungen zum Axial-, Radial- und Winkelversatzausgleich können erfindungsgemäß vorgesehen werden.

Anhand des Ausführungsbeispiels der Fig. 6 wird nun ein Ausführungsbeispiel eines Aktors 18 erläutert:
Der Aktor 18 umfasst einen Grundkörper 25, der mit einem nach innen vorspringenden Befestigungsflansch 41 unmittelbar an dem Zwischenstück 24, also einer Welle des Antriebsstranges 15, angeschraubt ist. Der Grundkörper 25 ist insoweit drehfest mit dem um die Rotationsachse 16 rotierenden Antriebsstrang 15 verbunden.

An dem Grundkörper 25 ist ein Drehlager 27a, 27b in Form zweier axial zu beiden Richtungen vorstehenden Ringbunde 27a, 27b gebildet. Auf den beiden Ringbünden 27a, 27b ist ein Schwungmassenkörper 26 in Umfangrichtung drehbar gelagert. Der Schwungmassenkörper 26 besteht aus zwei Schwungmassenkörperhälften 26a, 26b, die im wesentlichen identisch ausgebildet und aufeinander zugewandt angeordnet sind. Die beiden Schwungmassenkörperhälften 26a, 26b sind - was in Fig. 6 nicht dargestellt ist - miteinander bewegungsgekoppelt.

Der Schwungmassenkörper 26 ist relativ zu dem Grundkörper 25 entlang einem vorgegebenen begrenzten Umfangswinkelbereich von z. B. +- 10° rotierbar. Der Schwungmassenkörper 26 ist darüber hinaus über nicht dargestellte Federelemente mit dem Grundkörper 25 gekoppelt, und durch die Federelemente in einer Ruhe- oder Mittellage relativ zu dem Grundkörper 25 vorgespannt.

Durch eine elektrodynamische Anregung kann der Schwungmassenkörper 26 in Umfangsrichtung - in beide Drehsinne - relativ zu dem Grundkörper 25 gelagert werden, und hierdurch einen Drehimpuls auf den Grundkörper 25 ausüben, und damit den Antriebsstrang 15, und somit auch zugleich die Vorrichtung 10, mit einem Drehimpuls beaufschlagen. Dieser Drehimpuls ist ein Kompensationsdrehimpuls zu einer zuvor auf dem Antriebsstrang 15 festgestellten, als störend betrachteten Drehschwingung.

Bei einem Ausführungsbeispiel der Erfindung sind an dem Grundkörper 25 in Umfangsrichtung äquidistant voneinander angeordnet eine Mehrzahl von Spulen 29 vorgesehen. Fig. 6 - und auch die weiteren Ausführungsbeispiele - zeigen der Übersichtlichkeit halber jeweils nur eine Spule.

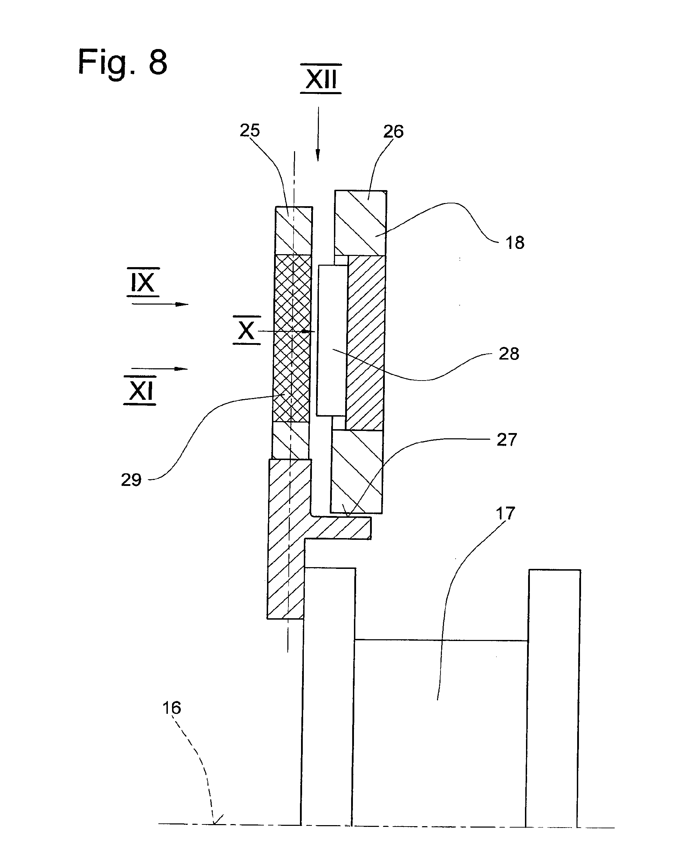

Bei den Ausführungsbeispielen sind darüber hinaus jeder Spule 29 zwei Permanentmagnete 28a, 28b in jeder Schwungmassenkörperhälfte 26a, 26b zugeordnet. Auch diese geometrische Anordnung ist lediglich beispielhaft zu verstehen. Das elektromagnetische Grundprinzip wird später noch anhand der Figuren 8 bis 12 erläutert werden. Hieraus wird dann deutlich werden, dass die Verwendung von Spulen 29 nicht erforderlich ist. Es genügt im Prinzip eine geeignete Anordnung von Leiterabschnitten 32a, 32b in einem Magnetfeld.

Bereits jetzt soll allerdings das Grundprinzip des elektrodynamischen Aktors 18 beschrieben werden:
Für den Fall, dass über einen beispielhaft in Fig. 1 schematisch angedeuteten Sensor 35 eine Drehschwingung auf dem Antriebsstrang 15 festgestellt wird, kann von der Steuerung 36 ein Kompensationsdrehmoment errechnet wird, und über die Wirkleitung 37b (Fig. 1) ein entsprechendes Signal an die Spule 29 übermittelt werden. Hierzu ist in Fig. 6 eine nur schematisch angedeutete Strom-Drehdurchführung 19 für Stromleitungen angedeutet.

Die in Fig. 6 nicht dargestellte - vorteilhafterweise ortsfest angeordnete - Steuerung 36 ist über die Stromdurchführung 19 mit einem elektrischen Leiter 30 verbunden, der - wie in Fig. 6 lediglich schematisch angedeutet - mit der Spule 29 verbunden ist. Die Anschlussleitungen der entsprechenden Spule 29 sind in den Figuren 9 und 12 mit 34a bzw. 34b bezeichnet. Diese Anschlussleitungen 34a, 34b, sind mit den in Fig. 6 lediglich schematisch mit 30 bezeichneten Leitungen bzw. mit der Wirkleitung 37b elektrisch verbunden.

Durch die Steuerung 37 veranlasst, fließt durch entsprechende Leiterabschnitte 32a, 32b (vgl. Fig. 11) ein Strom. Da der entsprechende Leiterabschnitt sich unmittelbar in einem von Permanentmagneten 28a, 28b, 28c, 28d erzeugten Magnetfeld befindet, wirkt eine Lorentzkraft.

Die Permanentmagneten 28a, 28b, 28c, 28d sind in den beiden Schwungmassenkörperhälften 26a, 26b ebenfalls fest und in Umfangsrichtung äquidistant verteilt angeordnet. Wie Fig. 11 deutlich macht, sind die Permanentmagneten 28a, 28b, 28c, 28d jeweils so angeordnet, dass sie einen im wesentlichen radial - bezogen auf die Rotationsachse 16 - verlaufenden Leiterabschnitt 32a, 32b im wesentlichen vollständig, vorzugsweise etwa im wesentlichen mittig, überdecken.

Die demgegenüber in Umfangsrichtung verlaufenden Leiterabschnitte 33a, 33b der Leiterschleife 31 in der Spule 29 sind ausweislich Fig. 11 im wesentlichen außerhalb der Konturen der Permanentmagneten 28a, 28b, 28c, 28d angeordnet.

Sobald die radial verlaufenden Leiterabschnitte 32a, 32b von Strom durchflossen werden, wirkt aufgrund des durch die Permanentmagneten 28a, 28b, 28c, 28d erzeugten Magnetfelds eine Lorentzkraft auf die Leiterabschnitte32a, 32b. Diese ist bestrebt, die Leiterabschnitte 32a, 32b aus dem Magnetfeld heraus zu bewegen, was nicht möglich ist, da der Grundkörper 25 fest mit dem Antriebsstrang 15 verbunden ist, und mit diesem um die Rotationsachse 16 rotiert. Es wird also eine Kraft auf die Magneten 28a, 28b, 28c, 28d generiert, die dazu führt, dass die Schwungmassenkörperhälften 26a, 26b relativ zu dem festgehaltenen Grundkörper 25 in Rotation versetzt werden. Hierdurch wird ein entsprechender Drehimpuls generiert.

Die Art der Ansteuerung der Leiterabschnitte 32a, 32b durch die Steuerung 37 unterliegt komplizierteren Algorithmen und hängt insbesondere von den zu erwartenden und den gemessenen Drehschwingungen ab.

Durch Anordnung eines elastischen Elementes 17, unter Verwendung eines Körpers 17a, 17b aus gummielastischem Material, kann der Frequenzbereich und der Amplitudenbereich der erwartungsgemäß zu tilgenden Drehschwingungen in einem guten Maß vorherbestimmt und vorhergesagt werden.

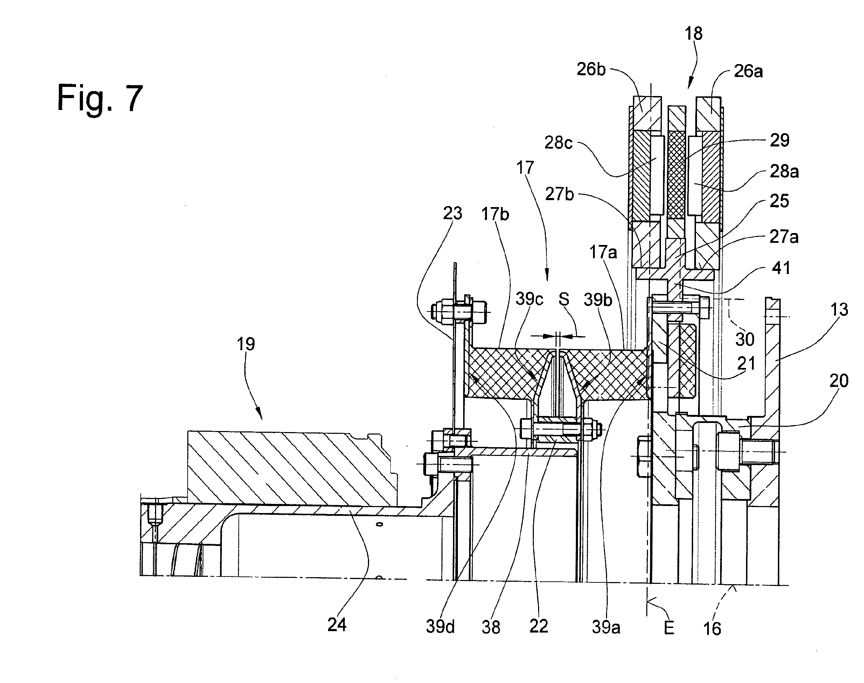

Ausweislich des Ausführungsbeispiels der Fig. 7 soll noch eine Ausführungsform beschrieben werden, bei der die Vorrichtung 10 der erfindungsgemäßen Art insgesamt axial sehr kurz bauend ausgebildet sein kann. Hier ist der Aktor 18 ringförmig ausgebildet und umgibt einen Teil des elastischen Elementes 17 im wesentlichen ringförmig.

Sowohl das Aktorelement 18, als auch das elastische Element 17 sind entlang einer gemeinsamen Radialebene E angeordnet. Der Normalenvektor der Ebene E wird von der Rotationsachse 16 bereit gestellt.

Ausweislich des Ausführungsbeispiels der Fig. 8 wird deutlich, dass sich jeweils ein Spulenkörper 29 und eine Paaranordnung von Permanentmagneten 28a, 28b unmittelbar einander gegenüber liegen. Fig. 8 veranschaulicht des weiteren, dass der Aktor 18 auch nur einen Schwungmassenkörper aufweisen kann.

Gemäß Fig. 9 weist ein Spulenkörper 29 eine im wesentlichen trapezförmige, sich in Radialrichtung nach außen verbreiternde Form auf. Die Leiterschleife 31 kann eine Vielzahl von Wicklungen aufweisen, und beispielsweise kreisringförmig gewickelt sein.

Fig. 11 macht demgegenüber deutlich, dass die Spule 29 bei einer vorteilhaften Ausgestaftung der Erfindung auch anders gewickelt sein kann, und sich die Leiterschleife 31 hinsichtlich ihrer Konturen an die trapezförmigen Kontur des Körpers 29 insgesamt anpassen kann.

Bei vergleichender Betrachtung der Figuren 8 bis 12 wird deutlich, dass die Leiterabschnitte 32a, 32b, die im wesentlichen radial verlaufen, und innerhalb der Kontur der Magneten 28a, 28b angeordnet sind, zur Generierung des Kompensationsdrehimpulses beitragen.

Ausweislich Fig. 12 ergibt sich, dass die beiden Permanentmagnete 28a, 28b jeweils paarweise umgekehrt angeordnet sind, so dass sich ein im wesentlichen geschlossener Magnetfluss ergibt.

Mit 42 ist im übrigen eine Eisenrückschlussplatte bezeichnet, mit der die magnetischen Feldlinien geschlossen werden können.

Die in Fig. 12 im Detail nicht dargestellte linke Seite des Aktors 18 kann unter Zuhilfenahme eines weiteren Schwungmassenkörpers 26b unter Verwendung eines weiteren Paares von Magneten 28a, 28b zum vollständigen Schluss der Magnetlinien, wie durch den gestrichelten Pfeil angedeutet, beitragen.

Wird nun ein Leiterabschnitt 32a, 32b von Strom durchflossen, wirkt dann bekannterweise die Lorentzkraft und sorgt für eine Kraftbeaufschlagung auf den Schwungmassenkörper 26 in Umfangsrichtung - je nach Stromrichtung in dem einen oder in dem anderen Drehsinne.

In Kenntnis der Frequenzen und der Amplituden der im Antriebsstrang gemessenen Drehschwingungen können die Kompensationsschwingungen berechnet und generiert werden.

Je nach Wahl des Aufbaus der Schaltung von Aktorelement und elastischem Element, kann eine Positionierung des Sensors 35 stromaufwärts oder stromabwärts des elastischen Elementes 17 und/oder stromaufwärts oder stromabwärts des Aktorelementes 18 vorgesehen sein.

Die Kombination eines elektrodynamischen Aktorelementes 18 mit einem elastischen Element 17 ermöglicht insoweit eine optimierte Kompensation von Drehschwingungen.

Darüber hinaus ermöglicht diese Kombination eines elektrodynamischen Aktorelementes 18 mit einem elastischen Element 17 auch die Bereitstellung einer gewissen Ausfallsicherheit. Falls der elektrodynamische Aktor vollständig ausfallen sollte, ist zumindest ein elastisches Element vorgesehen, welches in einem gewissen Maße allein - bei dem Ausfall des Aktorelementes - Drehschwingungen aufnehmen bzw. kompensieren kann.

## Patentansprüche

1. Vorrichtung (10) zur Übertragung von Drehmomenten von einem Antrieb (11) zu einem Abtrieb (12), umfassend einen ersten Anschluss (13), insbesondere einen Flansch, zur Verbindung mit dem Antrieb, und einen zweiten Anschluss (14), insbesondere einen Flansch, zur Verbindung mit dem Abtrieb, sowie wenigstens ein in dem Kraftleitungsweg zwischen den beiden Anschlüssen angeordnetes elastisches Element (17, 17a, 17b) zur Schwingungsdämpfung, **dadurch gekennzeichnet, dass** dem elastischen Element ein Aktorelement (18, 18a, 18b) zugeordnet ist, mit wenigstens einem Grundkörper (25) und einem relativ dazu drehbaren Schwungmassenkörper (26, 26a, 26b), wobei an dem einen der beiden Körper wenigstens ein Leiterabschnitt (32a, 32b) und an dem anderen der beiden Körper wenigstens ein Permanentmagnet (28a, 28b, 28c, 28d) angeordnet ist, und wobei der Leiterabschnitt derart in dem Magnetfeld positionierbar ist, dass bei Stromfluss durch den Leiterabschnitt der Grundkörper mit einem von dem Schwungmassenkörper generierten Drehimpuls im Sinne einer Kompensation von Drehschwingungen beaufschlagbar ist.

2. Vorrichtung nach Anspruch 1, **dadurch gekennzeichnet, dass** das Aktorelement (18) zu dem elastischen Element (17) in Reihe geschaltet ist.

3. Vorrichtung nach Anspruch 2, **dadurch gekennzeichnet, dass** das Aktorelement (18) - bezogen auf die Kraftleitungsrichtung - stromaufwärts des elastischen Elementes (17) angeordnet ist.

4. Vorrichtung nach Anspruch 2, **dadurch gekennzeichnet, dass** das Aktorelement (18) - bezogen auf die Kraftleitungsrichtung - stromabwärts des elastischen Elementes (17) angeordnet ist.

5. Vorrichtung nach einem der vorangegangenen Ansprüche, **dadurch gekennzeichnet, dass** wenigstens zwei elastische Elemente (17a, 17b) vorgesehen sind, und dass das Aktorelement (18) zwischen den beiden elastischen Elementen angeordnet ist.

6. Vorrichtung nach einem der vorangegangenen Ansprüche, **dadurch gekennzeichnet, dass** wenigstens zwei Aktorelemente (18a, 18b) vorgesehen sind, und dass wenigstens ein elastisches Element (17) zwischen den beiden Aktorelementen angeordnet ist.

7. Vorrichtung nach einem der vorangegangenen Ansprüche, **dadurch gekennzeichnet, dass** das Aktorelement (18) im wesentlichen ringförmig ausgebildet ist.

8. Vorrichtung nach einem der vorangegangenen Ansprüche, **dadurch gekennzeichnet, dass** das Aktorelement (18) das elastische Element (17) ringförmig umgibt.

9. Vorrichtung nach einem der vorangegangenen Ansprüche, **dadurch gekennzeichnet, dass** dem Aktorelement (18) und/oder dem elastischen Element (17) wenigstens eine Einrichtung (40, 23) zum Ausgleich von Axial-, Radial- oder Winkelversatz zwischen den beiden Anschlüssen (13, 14) zugeordnet ist.
